(19) Europäisches Patentamt / European Patent Office / Office européen des brevets

(11) **EP 1 566 050 B1**

(12) **FASCICULE DE BREVET EUROPEEN**

(45) Date de publication et mention
de la délivrance du brevet:
**01.09.2010 Bulletin 2010/35**

(51) Int Cl.:
***H04M 11/06*** *(2006.01)*

(21) Numéro de dépôt: **03786075.6**

(86) Numéro de dépôt international:
**PCT/FR2003/050139**

(22) Date de dépôt: **27.11.2003**

(87) Numéro de publication internationale:
**WO 2004/051977 (17.06.2004 Gazette 2004/25)**

(54) **FILTRE PASSE BAS DESTINE AUX LIGNES TELEPHONIQUES ADAPTEES A LA TRANSMISSION ADSL**

TIEFPASSFILTER FÜR TELEFONLEITUNGEN MIT ADSL-ÜBERTRAGUNG

LOW-PASS FILTER WITH ASIC WHICH IS INTENDED FOR TELEPHONE LINES THAT ARE ADAPTED FOR ADSL TRANSMISSION

(84) Etats contractants désignés:
**AT BE BG CH CY CZ DE DK EE ES FI FR GB GR HU IE IT LI LU MC NL PT RO SE SI SK TR**

(30) Priorité: **29.11.2002 FR 0215398**

(43) Date de publication de la demande:
**24.08.2005 Bulletin 2005/34**

(73) Titulaire: **Laboratoire Europeen ADSL Leacom Fastnet
92400 Courbevoie (FR)**

(72) Inventeurs:
• **DEDIEU, Hervé**
  **F-35500 Vitre (FR)**
• **GOLDEN, Philip**
  **F-35000 Rennes (FR)**

(74) Mandataire: **Camus, Olivier Jean-Claude
SCHMIT CHRETIEN
8, place du Ponceau
95000 Cergy (FR)**

(56) Documents cités:
**EP-A- 0 967 735 WO-A-00/48314**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention a pour objet un dispositif de filtrage passe-bas intervenant dans le découplage des voies ADSL (Asymetric Digital Subscriber Line, en anglais, pour ligne d'abonné numérique à débit asymétrique). Plus précisément, l'invention propose une architecture particulière d'un filtre passe-bas, particulièrement peu encombrante et moins coûteuse que les dispositifs de filtrage existant dans l'état de la technique, en y incorporant notamment un élément actif de type ASIC (Application Specific Integrated Circuit en anglais, pour circuit intégré à application spécifique). Le filtre selon l'invention est destiné à être incorporé dans un dispositif séparateur de signaux voix-données pour une transmission sur des voies ADSL.

Le dispositif de filtrage selon l'invention est destiné à être utilisé dans des centraux téléphoniques et/ou dans des installations privatives. De telles installations correspondent à des IPC (pour Infrastructure Privative Client), qui démarrent à la réglette du domicile et comprennent l'ensemble des câbles, paires de cuivre et prises téléphoniques. Elles sont raccordées à un réseau d'accès à des services bande étroite et à des services large bande. Dans la pratique, ces installations désignent essentiellement les installations téléphoniques et téléinformatiques qui sont raccordées, via une ligne téléphonique, au réseau téléphonique et qui comprennent un ou plusieurs terminaux bande étroite tels que, par exemple, les postes téléphoniques, les fax ou les modems, et un terminal large bande dont le fonctionnement permet exploiter les technologies ADSL.

Le domaine de l'invention est, d'une façon générale, celui de la technologie dite ADSL. Cette technologie est essentiellement mise en oeuvre sur des boucles locales des réseaux de téléphonie existant, la boucle locale étant constituée par les intermédiaires du réseau entre un central téléphonique et un poste d'abonné. Un des objectifs essentiels de cette technologie est de rendre possible, sur les boucles locales des anciens réseaux de téléphonie, la transmission simultanée de différents types de signaux : d'une part, les signaux relatifs aux conversations téléphoniques habituelles entre deux abonnés, ces premiers signaux comprenant des signaux relatifs à la voix et des signaux de signalisation, et d'autre part, des signaux relatifs à des données, typiquement des informations échangées entre un abonné et un site accessible via le réseau Internet.

Pour des transmissions selon cette technologie, on utilise donc la paire de fils de cuivre qui arrive chez l'abonné, et qui constitue depuis longtemps la ligne téléphonique, ou boucle d'abonné, à laquelle sont raccordés les différents combinés téléphoniques de l'utilisateur des réseaux analogiques traditionnels dits POTS (pour Plain Old Transmission System - système ancien de télécommunications) ou des réseaux numériques traditionnels dits ISDN (ou RNIS - réseau numérique à intégration de services). Cette paire de fils de cuivre est le plus souvent torsadée et comporte une gaine isolante en polyéthylène.

Sur cette paire de fils de cuivre, on transmet donc à la fois :

- en bande de base, des signaux analogiques non modulés correspondant aux réseaux POTS, ou des signaux numériques correspondant aux réseaux ISDN. Les signaux analogiques en bande de base sont de fréquence typiquement 0 à 4 kHz, ou 0 à 16 KHz si on tient compte des signaux de signalisation. Les signaux numériques en bande de base sont dans des fréquences de 0 à 94 KHz. En pratique, la bande de base est destinée à une transmission en mode circuit;

- en bande haute fréquence, d'autres signaux, numériques et modulés, qui correspondent par exemple aux informations échangées avec le réseau Internet. La bande haute s'étale du dessus de la bande de base téléphonique jusqu'à 1 MHz environ. En pratique la bande haute fréquence s'étale de 32 KHz à 1,1MHz si la paire de fils de cuivre sert en bande de base pour une transmission analogique POTS, et de 138 KHz à 1,1 MHz si elle sert pour une transmission numérique. Elle est normalement destinée à une transmission permanente, en mode paquets principalement, c'est à dire qu'une communication permanente est établie entre l'abonné et le central téléphonique. On est ainsi dispensé des opérations classiques intervenant lors d'une connexion avec accès par ligne commutée, qui est une méthode de connexion temporaire à un réseau informatique consistant à utiliser un modem, un logiciel de connexion et le réseau téléphonique commuté comme moyen de mise en communication de son propre ordinateur et d'un autre ordinateur du réseau.

Bien que la bande de base puisse être utilisée, notamment avec des modems de préférence numériques, pour transmettre des données, et que la bande haute fréquence puisse servir à assurer des communications phoniques dans le cadre de communications dites communications téléphoniques sur Internet, on considérera, de façon schématique, et dans un souci de simplification des explications, que la bande de base est utilisée pour la transmission d'un premier type de signaux, essentiellement des paroles, correspondant à des communications phoniques, et que la bande haute fréquence sert pour la transmission d'un deuxième type de signaux, essentiellement des données, relatives notamment à la consultation de sites Internet.

La bande de base n'est capable que d'un faible débit (actuellement 56 Kbits/s pour les modems analogiques et 64 Kbits/s pour les modems numériques) alors que la bande haute fréquence est susceptible de présenter un haut débit (pouvant avoisiner 10 Mbits/s).

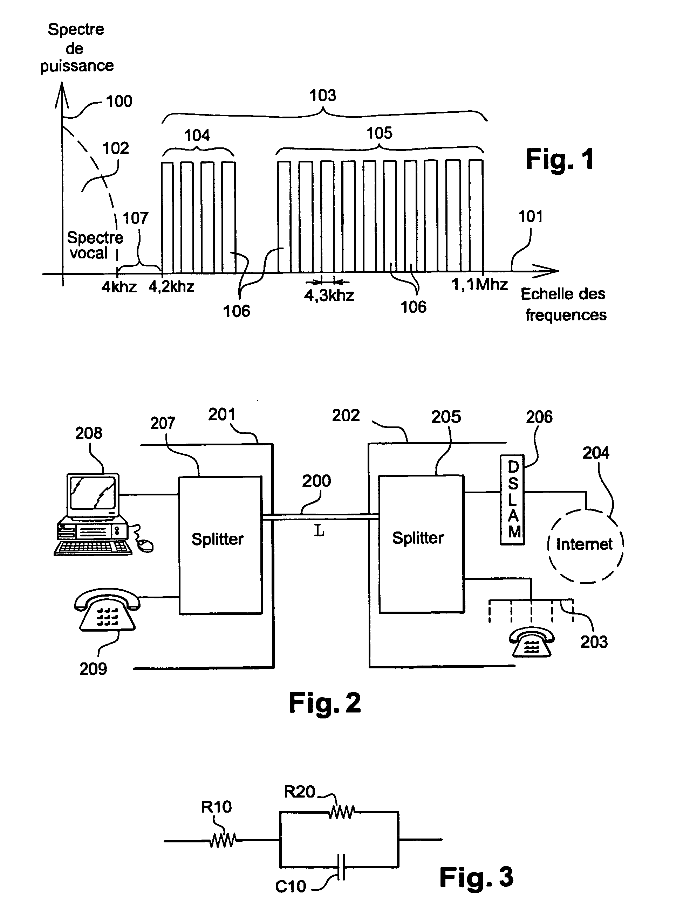

La figure 1 illustre l'exploitation de la bande de fréquence en distribution ADSL. L'axe des ordonnées 100 échelonne la puissance des signaux émis, et l'axe des abscisses 101 donne l'échelle des fréquences. Les puissances émises sont représentées de façon équirépartie dans un but de simplification. On retrouve le spectre vocal 102 s'étendant de 0 à 4 kHz, et le spectre 103 utilisé pour la transmission de données selon la technologie ADSL, ce dernier s'étendant d'environ 30 kHz à 1,1 MHz. Les signaux ayant une fréquence appartenant au spectre 103 seront désignés comme signaux ADSL. Le spectre 103 est divisé en deux parties principales : une première bande de fréquence 104 correspondant au spectre utilisé pour les données montantes (de l'abonné vers le central) et une deuxième bande de fréquence 105 correspondant au spectre utilisé pour les données descendantes (du central vers l'abonné). La deuxième bande de fréquence 105 est plus large que la première bande de fréquence 104 car les données montantes, qui correspondent le plus souvent à des requêtes émises par un abonné, ont des débits plus faibles que les données descendantes ; ces dernières correspondant par exemple, au téléchargement de gros fichiers, d'images, ou autres .

L'utilisation d'une ligne dite ADSL nécessite donc de séparer la bande de base, basse fréquence, de la bande haute fréquence. La figure 2 illustre schématiquement ces séparations au niveau d'une boucle locale de communication. Sur cette figure, on a représenté une ligne téléphonique usuelle 200, ou boucle d'abonné, composée d'une première ligne de transmission et d'une deuxième ligne de transmission, qui assure la liaison entre un abonné 201, qui dispose d'une installation privative, et un central téléphonique 202.

Le central téléphonique 202 assure la connexion à un réseau de téléphonie classique 203 et à un réseau de type Internet 204. Afin de dissocier les signaux destinés au réseau téléphonique 203 et au réseau Internet 204, un premier dispositif 205 séparateur de signaux voix-données, également appelé filtre à aiguillage ou splitter, est utilisé. D'une façon générale, un splitter est un dispositif électronique associé à un modem ADSL qui permet de séparer les signaux de la voix des signaux de données et de les acheminer sur deux voies différentes. Le splitter 205 sera désigné par la suite comme splitter central. Le splitter central comporte notamment un filtre basse fréquence, objet de l'invention, qui permet d'éviter que les signaux phoniques destinés au - ou provenant du - réseau téléphonique 203 soient perturbés par les signaux destinés au - ou provenant du - réseau Internet 204. Les données destinées au - ou provenant du - réseau Internet 204 transitent par un multiplexeur d'accès DSL 206, appelé DSLAM (pour Digital Subscriber Line Access Multiplexer en anglais), qui est relié au splitter central 205.

Du côté de l'abonné 201, on trouve également un splitter 207 relié à la ligne téléphonique 200. Le splitter 207 est appelé splitter maître. Le splitter maître 207 a pour fonction de séparer, côté abonné, les signaux de données, qui sont orientés vers un ordinateur personnel 208 associé à un modem ADSL, et les signaux de voix, qui sont orientés vers des combinés téléphoniques classiques 209. Chaque téléphone 209 connecté à la même ligne 200 doit être protégé par un filtre passe-bas contenu dans le splitter 207. La compacité de ces filtres les a consacrés sous l'appellation microfiltres.

En théorie, on trouve également dans le splitter maître 207 un filtre haute fréquence, qui laisse passer les signaux ADSL. Dans la pratique, le filtre basse fréquence du splitter 207 et le filtre haute fréquence sont séparés et distincts. Le filtre haute fréquence, c'est à dire le filtre qui laisse passer les signaux de données et uniquement ceux-là, est disposé, côté abonné, entre la ligne téléphonique 200 et l'ordinateur personnel 208. Le filtre haute fréquence peut être incorporé, partiellement ou totalement, dans un modem ADSL. Le filtre basse fréquence est, pour sa part, disposé côté abonné entre la ligne téléphonique 200 et chaque combiné téléphonique classique 209. Le filtre basse fréquence sert à empêcher que les signaux phoniques soient perturbés par les signaux de données.

L'objet de l'invention est la réalisation d'un filtre basse fréquence tel que le filtre 210 ou le filtre basse fréquence disposé dans le splitter 205.

L'installation des filtres, et notamment des filtres passe-bas, doit satisfaire à plusieurs contraintes dictées par différentes normes, telles celle de l'ITU G992.1 et celle de l'ESTI, TR 101 728.

- le respect de valeurs d'impédances d'entrée et de sortie imposées. Afin que la puissance transmise par la ligne téléphonique le soit avec le meilleur rendement possible, les lignes téléphoniques doivent être caractérisées, en entrée et en sortie, par une impédance ayant une valeur aussi proche que possible de l'impédance complexe caractéristique de la ligne téléphonique. L'introduction de filtres sur la ligne téléphonique doit respecter ce principe. On appelle Zc une telle impédance caractéristique. Dans la pratique Zc est une valeur imposée par une norme, la norme en question pouvant être différente d'un pays à l'autre. On trouve ainsi notamment l'impédance européenne harmonisée, l'impédance anglaise, l'impédance allemande, et deux impédances américaines dites à 600 ohms et 900 ohms respectivement. Les différences entre ces impédances dépendent notamment du diamètre des fils de cuivre utilisés, de l'isolant et du pas des torsades ainsi que des options de modélisation choisies. Typiquement, une impédance caractéristique peut être modélisée sous la forme représentée à la figure 3, sur laquelle une première résistance $R_{10}$ est disposée en série avec une deuxième résistance $R_{20}$, elle-même montée en parallèle avec un condensateur $C_{10}$. L'impédance équivalente à ce montage est $Zc=R_{10}+R_{20}*(1-jR_{20}Cw)/(1+(R_{20}C_{10}w)^2)$, où w représente la pulsation d'un signal circulant sur la ligne téléphonique. Lors de l'insertion d'un splitter sur la ligne téléphonique, il convient de s'assurer que les impédances d'entrée et de sortie du splitter sont suffisamment proches de l'impédance caractéristique de ligne. On assure ainsi une meilleure transmission et on minimise chez l'abonné le phénomène d'écho local.

- le facteur dit d'affaiblissement d'insertion, ou ILF (pour Insertion Loss Factor en anglais), qui mesure un affaiblissement de puissance d'une voie de transmission lorsqu'il s'y trouve des montages en pont, des filtres, des égaliseurs ou d'autres montages. Dans le cas présent, ce facteur mesure la perte de transmission occasionnée dans le circuit par la mise en place d'un filtre, entre une situation où le filtre n'est pas présent et une situation où il est mis en place ; selon la plupart des normes en vigueur, cette perte doit être inférieure à 1 dB à 1 kHz. La distorsion d'atténuation sur la bande POTS devant être, en valeur absolue, inférieure à 1 dB par rapport à l'atténuation constatée à 1 kHz.
- le facteur dit d'affaiblissement de réflexion, ou RLF (pour Return Loss en anglais), qui est une mesure liée à la puissance de signal réfléchi par rapport à la puissance de signal transmissible. Il s'exprime par la formule suivante :

$$RLF = 20 \log 10 \ abs(((Zin(w)+Zc(w)) \ / \ ((Zin(w)-Zc(w))),$$

où Zin(w) mesure l'impédance d'entrée du dispositif dont on veut mesurer le RLF, et où Zc(w) est l'impédance d'une charge de référence. On voit clairement que le Return Loss correspond à une mesure d'adaptation d'impédance. Lorsque l'adaptation est parfaite (Zin(w)=Zc(w)), le Return Loss tend vers l'infini. Dans les normes, l'affaiblissement de réflexion pour un filtre basse fréquence doit être supérieur à environ 18 dB dans la bande de base utile (300 - 3400 Hz en réseau POTS, et 300 - 94000 Hz en réseau ISDN).
- le facteur dit d'atténuation en bande ADSL, qui détermine une perte de puissance à faire subir aux signaux dont la fréquence appartient aux fréquences ADSL ;
- le facteur dit de distortion d'insertion (insertion distortion en anglais), qui impose un variation maximale du facteur d'affaiblissement d'insertion.

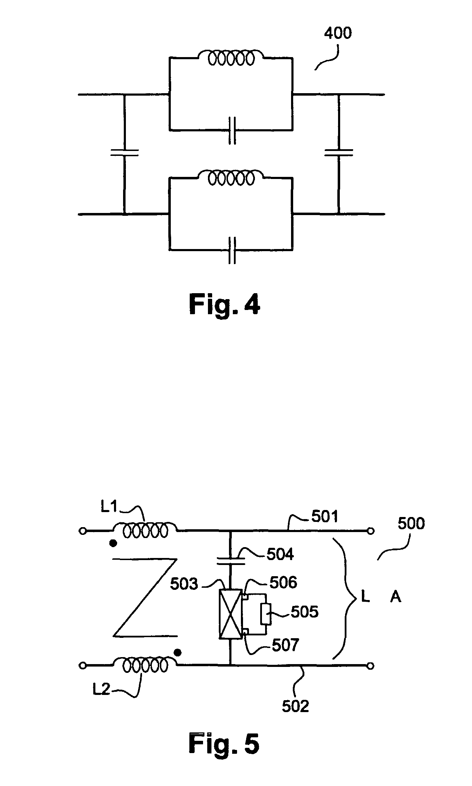

Pour tenter de satisfaire à toutes ces contraintes, il a été imaginé différents types de filtres basse fréquence. Une des solutions préférées de l'état de la technique est l'utilisation de filtres elliptiques, également appelés filtres de Cauer, connus de l'homme du métier. Ces filtres sont constitués d'une succession de cellules elliptiques 400, dont la structure de base symétrisée est représentée figure 4. Ils permettent notamment d'obtenir rapidement, c'est à dire dans une plage de fréquence étroite, un taux de réjection, entre les signaux transmis dans le spectre vocal et les signaux transmis dans les bande de fréquence ADSL, correspondant à celui exigé par différentes normes Un autre type de filtre est révélé par le document EP-A-0967 735.

Cependant, de telles structures de filtres ne sont pas entièrement satisfaisantes. Elles présentent de nombreux inconvénients, parmi lesquels on trouve les suivants:

- les exigences des différentes normes, notamment en terme de niveau de réjection des signaux ADSL, impliquent la présence d'au moins trois à quatre transformateurs au sein du filtre basse fréquence, la cellule de base 400 représentée devant être répétée au moins deux fois pour obtenir un filtre satisfaisant. Ceci a pour conséquence directe un coût non négligeable dans la réalisation de tels filtres ;
- du fait du nombre important de bobines nécessaires dans les filtres de l'état de la technique, l'espace occupé par chaque splitter est important, chaque bobine occupant un espace d'environ 1.5 à 2 cm$^2$. Cet encombrement n'est pas négligeable, essentiellement du côté central téléphonique où de nombreux splitters sont montés ensemble sur une même carte ;
- les filtres de type elliptiques ne sont pas parfaitement adaptés aux lignes téléphoniques dont l'impédance caractéristique est complexe, comme par exemple celle représentée à la figure 3.

Un des objets essentiels de l'invention est de proposer un filtre passe-bas qui s'affranchit des inconvénients qui viennent d'être exposés. A cet effet, le filtre passe-bas selon l'invention est réalisé en partie sous la forme d'un circuit intégré de type ASIC. Un problème supplémentaire apparaît alors : en effet, lorsque des signaux circulent sur une ligne téléphonique, on voit nécessairement apparaître des courants continus de l'ordre de 20 milliampères. Il est absolument nécessaire de laisser passer ce courant continu pour le bon fonctionnement de la ligne téléphonique. Or la conception d'un ASIC laissant passer des courants continus est relativement complexe, du fait de la présence systématique d'un chemin capacitif dans des gyrateurs émulant les inductances élémentaires.

Dans l'invention, on résout ce nouveau problème en disposant l'ASIC en parallèle entre les deux lignes de transmission constituant la ligne téléphonique. Le courant continu peut ainsi circuler sur chaque ligne de transmission sans nécessairement traverser l'ASIC. Une telle disposition permet de s'affranchir des difficultés de conception dans l'élaboration de l'ASIC pour gérer le passage de courants continus. Par ailleurs, on prévoit, dans l'invention, de disposer une inductance sur chaque ligne de transmission afin d'assurer au filtre passe-bas selon l'invention, notamment au début de la bande de fréquence ADSL, une impédance d'entrée suffisamment importante pour satisfaire les normes en vigueur. Dans un mode de réalisation particulier de l'invention, une capacité de découplage n'est pas intégrée dans l'ASIC, mais est disposée en série avec l'ASIC ; une telle architecture permet notamment de s'assurer d'une part que les courants continus présents sur la ligne ne traversent jamais l'ASIC, et d'autre part que l'ASIC ne soit pas soumis à une tension trop importante, même lors de l'apparition de signaux de sonnerie sur la ligne téléphonique.

L'invention concerne donc essentiellement un dispositif de filtrage passe-bas utilisé sur une ligne téléphonique composée d'une première ligne de transmission et d'une deuxième ligne de transmission, susceptible de faire circuler simultanément, entre un central téléphonique et un abonné équipé d'au moins un téléphone, des premiers signaux correspondant à des services bande étroite analogique et/ou numérique, et des seconds signaux correspondant à des services large bande **caractérisé en ce qu'**il comporte une partie active, constituée au moins d'un élément actif de type ASIC, disposé en parallèle entre la première ligne de transmission et la deuxième ligne de transmission, la partie active étant associée à une partie passive comportant notamment un premier élément passif et un deuxième élément passif de type inductance disposés en série respectivement sur la première ligne de transmission et sur la deuxième ligne de transmission de la ligne.

Le dispositif selon l'invention peut comporter une ou plusieurs caractéristiques parmi les suivantes :

- la partie active a une impédance exprimable sous la forme d'une fraction rationnelle, rapport entre un premier polynôme en p constituant le numérateur et un deuxième polynôme en p constituant le dénominateur, le deuxième polynôme ne possédant pas de terme d'ordre zéro et le deuxième polynôme étant d'un ordre supérieur à l'ordre du premier polynôme.
- la partie active comporte une capacité disposée en série avec l'élément actif de type ASIC.
- la partie active comporte une impédance d'adaptation connectée à deux ports distincts de l'ASIC.
- le dispositif de filtrage est disposé il est disposé au niveau du central téléphonique et/ou au niveau de l'abonné.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :

- à la figure 1, déjà décrite, une représentation de l'exploitation de la bande de fréquence en distribution ADSL ;
- à la figure 2, déjà décrite, une illustration du principe de la séparation des signaux basse fréquence et haute fréquence sur une ligne ADSL ;
- à la figure 3, déjà décrite, une modélisation d'une impédance caractéristique complexe d'une ligne téléphonique ;
- à la figure 4, une représentation d'un filtre de type elliptique utilisé dans l'état de la technique ;
- à la figure 5, une représentation du dispositif de filtrage passe-bas selon l'invention ;
- à la figure 6, une courbe représentant le facteur d'affaiblissement d'insertion obtenu avec le filtre selon l'invention ;
- à la figure 7, une courbe représentant le facteur d'affaiblissement de réflexion obtenu avec le filtre selon l'invention.

La figure 5 représente la structure générale d'un dispositif de filtrage passe-bas 500 de l'invention. Comme il l'a déjà été dit, le filtre selon l'invention est destiné à être placé du côté abonné ou du côté central téléphonique. Le filtre représenté est destiné à être disposé du côté abonné ; ainsi, la description de cette figure s'effectue de gauche à droite, c'est à dire en partant du côté ligne Li, raccordé au central téléphonique, vers le côté abonné A. Sur cette figure, une ligne téléphonique classique L est composée d'une première ligne de transmission 501, appelée brin A ou ligne TIP, et d'une deuxième ligne de transmission 502, appelée brin B ou ligne RING.

Sur la première ligne de transmission 501 et sur la deuxième ligne de transmission 502, on dispose respectivement une première inductance L1 et une deuxième inductance L2. Sur la figure, les inductances L1 et L2 sont représentées comme étant couplées. Dans une autre réalisation possible du filtre selon l'invention, les inductances L1 et L2 peuvent ne pas être couplées. En parallèle entre la première ligne de transmission 501 et la deuxième ligne de transmission 502, on a placé un élément actif de type ASIC 503. L'ASIC 503 est en série avec une capacité 504 dite capacité de découplage. Une impédance 505, dite impédance d'adaptation, est connectée entre un premier port 506 et un deuxième port 507 de l'ASIC 503, ces ports étants distincts de ceux servant à relier l'ASIC 503 aux deux lignes de transmission 501 et 502.

La partie dite active du filtre 500 est constituée de l'ASIC 503, associé à l'impédance d'adaptation 505, et de la capacité 504 de découplage. La partie active se caractérise notamment par une l'impédance $Z(p)$, où p est la variable de Laplace liée à la pulsation w par la formule $p=jw$. $Z(p)$ est exprimable sous la forme $Z(p)=f(p)/g(p)$ où $f(p)$ et $g(p)$ correspondent respectivement à un premier polynôme en p et à un deuxième polynôme en p ; du fait que le filtre à réaliser est un filtre passe-bas, l'ordre du polynôme g(p) est supérieur à l'ordre du polynôme f(p). Dans la pratique, la différence d'ordre entre ces polynômes est égale à 1.

Dans un exemple particulier de réalisation, on a :

$$Z(p)= Z'(p).((A0 + A1p + A2p^2 + A3p^3 + A4p^4)/(B1p + B2\,p^2 + B3p^3 + B4p^4 + B5p^5)) \qquad (\text{équation 1})$$

Où Z'(p) est l'impédance caractéristique de la ligne téléphonique considérée. Typiquement, cette impédance caractéristique vaut 600 ohms, 900 ohms, ou bien est une impédance caractéristique complexe.

Z(p) est donc une fraction rationnelle entre un polynôme d'ordre 4 et un polynôme d'ordre 5. Une telle expression est obtenue lorsqu'on remplace un filtre passif de type filtre de Cauer à deux cellules elliptiques de base.

Dans l'invention, pour déterminer, d'une façon générale, l'impédance Z(p), on procède de la façon suivante:

- on considère la fonction de transfert H(p)=A(p)/B(p) d'un filtre passif passe-bas d'ordre impair, par exemple de type elliptique ou de tchebycheff ayant une fréquence de coupure compatible avec l'application dans laquelle est destiné à être utilisé le filtre selon l'invention, et débitant sur des résistances normalisées unitaires ;
- on établit, par une succession de calculs accessibles à l'homme du métier, une correspondance entre les polynômes A(p) et B(p) et une impédance normalisée Zn(p)=fn(p)/gn(p). Cette impédance visant à remplacer le quadripôle filtre par un seul dipôle d'impédance Zn(p) tout en conservant le fonction de transfert en tension du filtre original; on obtient notamment les équations suivantes :

$$fn(p)=A(p)/2 \qquad (\text{équation 2})$$

$$gn(p)=B(p)-A(p) \qquad (\text{équation 3})$$

- on multiplie l'impédance normalisée Zn(p) par une impédance de charge à connecter aux extrémités de la ligne téléphonique, l'impédance de charge correspondant le plus souvent à l'impédance caractéristique de la ligne téléphonique pour obtenir, par exemple, une équation de la forme de l'équation 1.

Du fait de la forme de l'équation 1, on voit que l'impédance Z(p) tend vers 0 lorsque les fréquences des signaux tendent vers l'infini. Aussi, afin que l'impédance d'entrée soit suffisamment élevée, c'est à dire de l'ordre de 1 kilo-ohm, notamment au début de la bande de fréquence des signaux ADSL, on prévoit la présence des inductances L1 et L2. La valeur de ces impédances est donc choisie pour que le filtre selon l'invention présente toujours une impédance d'entrée suffisamment élevée, tout en étant suffisamment peu élevée pour que le facteur d'affaiblissement de réflexion satisfasse toujours aux normes. Typiquement, dans un exemple particulier de réalisation, la valeur de chaque impédance L1 et L2 est comprise entre 5,8 milliHenry et 15 milliHenry.

L'équation 1 peut également être écrite sous la forme :

$$Z(p)= 1/Cp +Z'(p).((C0 + C1p + C2p^2 + C3p^3)/(D0p + D1\,p + D2p^2 + D3p^3 + D4p^4)) \qquad (\text{équation 4})$$

En effet, comme on peut le voir dans l'équation 1, le terme d'ordre zéro du dénominateur de Z(p) est nul ; ceci est facilement obtenu lors des calculs permettant de mettre en correspondance la fonction de transfert du filtre passif et l'impédance du filtre actif. Une telle expression permet d'expliquer pourquoi on peut disposer, en série avec l'ASIC 503, une capacité de découplage 504 de valeur C. Le fait que la capacité de découplage pourrait être intégrée dans l'ASIC permet de la considérer comme appartenant à la partie active du filtre. Typiquement la valeur de la capacité 504 est comprise entre 10 nanofarads et 220 nanofarads.

L'intérêt de ne pas réaliser la capacité de découplage 504 dans l'ASIC 503 est qu'on évite ainsi d'avoir des tensions trop importantes aux bornes de l'ASIC 503. En effet, l'association en série de la capacité découplage 504 et de l'ASIC 503 réalise un diviseur de tension. Ainsi, les signaux de forte tension, tels que les signaux de sonnerie, de fréquence variant de 25 Hz à 60 Hz et de tension avoisinant les 200 volts, ne risquent pas de dégrader l'ASIC et ses performances. En choisissant une valeur appropriée à la capacité de découplage, on peut limiter la tension aux bornes de l'ASIC 503, par exemple à 20 volts, ce qui permet d'utiliser par exemple des technologies de type CMOS dans la réalisation de l'ASIC.

L'impédance d'adaptation 505 permet, à partir d'une réalisation du filtre selon l'invention adaptée à une première ligne téléphonique caractérisée par une première impédance de ligne, de s'adapter facilement à une deuxième ligne téléphonique caractérisée par une deuxième impédance de ligne ; il suffit, à cet effet, de prendre comme impédance d'adaptation une impédance correspondant au rapport entre la première impédance caractéristique et de la deuxième impédance caractéristique.

Dans un exemple particulier de réalisation du dispositif de filtrage selon l'invention, correspondant à une impédance de ligne de 900 ohms, les valeurs des coefficients de l'équation 4 sont les suivants :

$C=36.18$ nF
$L1=L2=7.6$ mH
$C0=-0.0109$
$C1=-1.2157\ 10^{-7}$
$C2=-7.8745\ 10^{-13}$
$C3=-5.57\ 10^{-18}$
$D0=0.0336$
$D1=3.65\ 10^{-7}$
$D2=5.31\ 10^{-12}$
$D3=2.586\ 10^{-17}$
$D4=1.9391\ 10^{-22}$

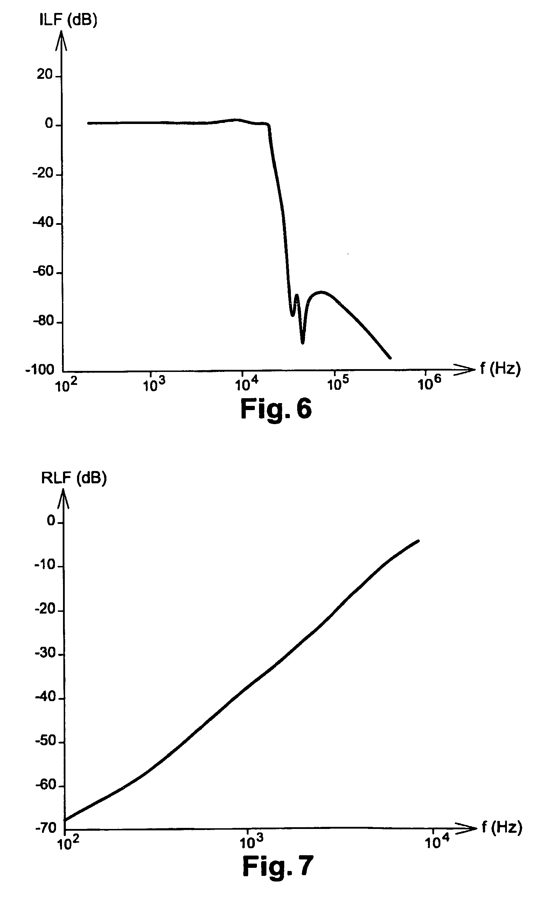

On obtient, avec un tel exemple de réalisation, des courbes de taux d'affaiblissement d'insertion et d'affaiblissement de réflexion telles que représentées respectivement aux figures 6 et 7.

Le dispositif de filtrage selon l'invention a été décrit dans le cadre de signaux ADSL. Il peut bien évidemment être utilisé avec des signaux dits large bande intervenant dans les technologies de type VDSL, HDSL ou encore SDSL.

**Revendications**

1. Dispositif de filtrage passe-bas (500) utilisé sur une ligne téléphonique (L) composée d'une première ligne de transmission (501) et d'une deuxième ligne de transmission (502), susceptible de faire circuler simultanément, entre un central téléphonique (202) et un abonné (A) équipé d'au moins un téléphone (209), des premiers signaux correspondant à des services bande étroite analogique et/ou numérique, et des seconds signaux correspondant à des services large bande **caractérisé en ce qu'**il comporte une partie active, constituée au moins d'un élément actif de type ASIC (503), disposé en parallèle entre la première ligne de transmission (501) et la deuxième ligne de transmission (502), la partie active étant associée à une partie passive comportant notamment un premier élément passif (L1) et un deuxième élément passif (L2) de type inductance disposés en série respectivement sur la première ligne de transmission (501) et sur la deuxième ligne de transmission (502) de la ligne (L), la partie passive comportant une capacité (504) disposée en série avec l'élément actif de type ASIC (503).

2. Dispositif de filtrage (500) selon la revendication précédente **caractérisé en ce que** la partie active a une impédance exprimable sous la forme d'une fraction rationnelle, rapport entre un premier polynôme en p constituant le numérateur et un deuxième polynôme en p constituant le dénominateur, le deuxième polynôme ne possédant pas de terme d'ordre zéro et le deuxième polynôme étant d'un ordre supérieur à l'ordre du premier polynôme.

3. Dispositif de filtrage (500) selon l'une au moins des revendications précédentes **caractérisé en ce que** la partie active comporte une impédance d'adaptation (505) connectée à deux ports distincts (506 ;507) de l'élément actif de type ASIC (503).

4. Dispositif de filtrage (500) selon l'une au moins des revendications précédentes **caractérisé en ce qu'**il est disposé au niveau du central téléphonique (202).

5. Dispositif de filtrage (500) selon l'une au moins des revendications précédentes **caractérisé en ce qu'**il est disposé au niveau de l'abonné (A).

6. Dispositif de filtrage (500) selon l'une au moins des revendications précédentes **caractérisé en ce que** le premier élément passif (L1) et le deuxième élément passif (L2) de type inductance ont des valeurs comprises entre 5,8 milliHenry et 15 milliHenry.

**7.** Dispositif de filtrage (500) selon l'une au moins des revendications précédentes **caractérisé en ce que** la valeur de la capacité (504) est comprise entre 10 nanofarads et 220 nanofarads.

**Claims**

**1.** A low-pass filter device (500) used on a telephone line (L) comprised of a first transmission line (501) and a second transmission line (502), which can simultaneously circulate, between a telephone exchange (202) and a subscriber (A) equipped with at least one telephone (209), first signals corresponding to narrowband and/or digital services, and second signals corresponding to broadband services **characterized in that** it has an active part, consisting of at least one active ASIC element (503), disposed in parallel between the first transmission line (501) and the second transmission line (502), the active part being associated to a passive part having a first passive element (L1) and a second passive element (L2) with inductance, arranged in series respectively on the first transmission line (501) and on the second transmission line (502) of the line (L), the passive part having a capacitance (504) disposed in series with the active ASIC element (503).

**2.** A filtering device (500) according to the previous claim, **characterized in that** the active part has an impedance that can be expressed in the form of a rational fraction, the relationship between a first polynomial p forming the numerator and a second polynomial p forming the denominator, the second polynomial not having an exponent equal to zero and the second polynomial having an exponent greater than that of the first polynomial.

**3.** A filtering device (500) according to at least one of the previous claims, **characterized in that** the active part has an adapting impedance (505) connected to two separate ports (506; 507) on the active ASIC element (503).

**4.** A filtering device (500) according to at least one of the previous claims, **characterized in that** it is disposed at the telephone exchange (202).

**5.** A filtering device (500) according to at least one of the previous claims, **characterized in that** it is disposed at the subscriber (A).

**6.** A filtering device (500) according to at least one of the previous claims, **characterized in that** the first passive element (L1) and the second passive element (L2) with inductance have values between 5.8 millihenry and 15 millihenry.

**7.** A filtering device (500) according to at least one of the previous claims, **characterized in that** the capacitance value (504) is between 10 nanofarads and 220 nanofarads.

**Patentansprüche**

**1.** Vorrichtung zur Niederpassfilterung (500), die in einer Telefonleitung (L) zur Anwendung kommt, bestehend aus einer ersten Übertagungsleitung (501) und aus einer zweiten Übertragungsleitung (502), die imstande ist, zwischen einer Telefonzentrale (202) und einem Abonnenten (A), der zumindest mit einem Telefon (209) ausgestattet ist, gleichzeitig erste Signale entsprechend analogen und/ oder digitalen Schmalbandangeboten und zweite Signale, die Breitbandangeboten entsprechen, zu übertragen, **dadurch gekennzeichnet, dass** sie einen aktiven Abschnitt enthält, der zumindest aus einem aktiven Element vom Typ ASIC (503) besteht, der parallel zwischen der ersten Übertagungsleitung (501) und der zweiten Übertragungsleitung (502) angeordnet ist, wobei der aktive Abschnitt einem passiven Abschnitt zugeordnet ist, der vor allem ein erstes passives Element (L1) und ein zweites passives Element (L2) vom Typ Induktivität enthält, die jeweils in Reihe auf der ersten Übertagungsleitung (501) und auf der zweiten Übertragungsleitung (502) der Leitung (L) angeordnet sind, wobei der passive Abschnitt eine Kapazität (504) enthält, die in Reihe mit dem aktiven Element vom Typ ASIC (503) angeordnet ist.

**2.** Filtervorrichtung (500) nach dem vorherigen Anspruch, **dadurch gekennzeichnet, dass** der aktive Abschnitt eine Impedanz hat, die sich in Form eines rationalen Bruches ausdrücken lässt, als Verhältnis zwischen einem ersten Polynom aus p, das den Zähler bildet, und einem zweiten Polynom aus p, das den Nenner bildet, wobei das zweite Polynom keinen Null-Exponent besitzt, und das zweite Polynom dem ersten Polynom übergeordnet ist.

3. Filtervorrichtung (500) nach zumindest einem der vorherigen Ansprüche, **dadurch gekennzeichnet, dass** der aktive Abschnitt eine Anpassungsimpedanz (505) enthält, die an zwei unterschiedliche Ports (506, 507) des aktiven Elements vom Typ ASIC (503) angeschlossen ist.

4. Filtervorrichtung (500) nach zumindest einem der vorherigen Ansprüche, **dadurch gekennzeichnet, dass** sie auf Seiten der Telefonzentrale (202) angeordnet ist.

5. Filtervorrichtung (500) nach zumindest einem der vorherigen Ansprüche, **dadurch gekennzeichnet, dass** sie auf Seiten des Abonnenten (A) angeordnet ist.

6. Filtervorrichtung (500) nach zumindest einem der vorherigen Ansprüche, **dadurch gekennzeichnet, dass** das erste passive Element (L1) und das zweite passive Element (L2) vom Typ Induktivität Werte zwischen 5,8 Millihenry und 15 Millihenry aufweisen.

7. Filtervorrichtung (500) nach zumindest einem der vorherigen Ansprüche, **dadurch gekennzeichnet, dass** der Kapazitätswert (504) zwischen 10 Nanofarad und 220 Nanofarad liegt.

Spectre
de
puissance

**Fig. 1**

Spectre
vocal

4khz  4,2khz  4,3khz  1,1Mhz  Echelle des frequences

100
102
107
106
104
103
105
106
101

**Fig. 2**

208 207 201 202 205 206 204
200 L
Splitter Splitter
D S L A M
Internet
209 203

R10 R20 C10

**Fig. 3**

400

**Fig. 4**

L1

501

500

504

503

506

505

507

L

A

L2

502

**Fig. 5**

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0967735 A